Europäisches Patentamt

European Patent Office

Office européen des brevets

(11) Publication number: **0 371 938**
**A1**

## (12) EUROPEAN PATENT APPLICATION

(21) Application number: **89850403.0**

(22) Date of filing: **17.11.89**

(51) Int. Cl.5: **B01J 27/182**

(30) Priority: **22.11.88 SE 8804222**

(43) Date of publication of application:
**06.06.90 Bulletin 90/23**

(84) Designated Contracting States:
**BE DE ES FR GB IT NL SE**

(71) Applicant: **Abrahamsson, Peter**
**Viktor Rydbergsgatan 42**
**S-412 57 Göteborg(SE)**

Applicant: **Gevert, Börje**
**Norra Liden 29**
**S-411 18 Göteborg(SE)**

Applicant: **Järas, Sven**
**Korngangen 9**
**S-442 39 Kungälv(SE)**

(72) Inventor: **Abrahamsson, Peter**
**Viktor Rydbergsgatan 42**
**S-412 57 Göteborg(SE)**
Inventor: **Gevert, Börje**
**Norra Liden 29**
**S-411 18 Göteborg(SE)**
Inventor: **Järas, Sven**
**Korngangen 9**
**S-442 39 Kungälv(SE)**

(74) Representative: **Roth, Ernst Adolf Michael et**
**al**
**GÖTEBORGS PATENTBYRA AB Box 5005**
**S-402 21 Göteborg(SE)**

(54) **A method of making a catalyst based on silicon dioxide and phosphoric acid.**

(57) A method for making a catalyst based on silicon and phosphoric acid at which porous granules or bodies, e.g. spheres, pellets or blocks, of silicon dioxide having a mean diameter of at least 1 mm and a high pore volume and pore size are used as carrier material. The granules or bodies are impregnated with phosphoric acid, after which they are dried at 100-300°C and calcinated at 200-700°C for binding the phosphoric acid to the carrier material. The calcinated material is then wetted with phosphoric acid, water or water vapour.

# A METHOD OF MAKING A CATALYST BASED ON SILICON DIOXIDE AND PHOSPHORIC ACID

## Background of the invention

Large amounts of liquified petroleum gas, so called LPG, are obtained at the refining of crude oil. LPG consists of low molecular compounds in the interval C3-C4. A part of these are unsaturated olefines. Large amounts of LPG are mainly obtained after different cracking processes. LPG is a product which often exists in a large excess, at the same time as there is a need for high octane petrol. This fact has resulted in the development of catalytic polymerisation. The olefin content in LPG is used in the process for forming less volatile compounds. The products can then be used as fuel in car engines. It is also possible to separate the products in fractions and refining them further within the petrochemical industry.

The reaction is catalysed by free protons. There are several processes which are based on different acids. The most common are based on hydrofluoric acid and sulphuric acid in liquid form. The systems are corrosive and makes a dangerous working environment. For this reason some refineries have chosen an old process based on a so called solid phosphoric acid catalyst. This is a process developed during the 1930-50-ies.

The catalyst used herewith usually consists of silicon dioxide, e.g. kieselguhr, mixed with either phosphoric acid or phosphorous pentoxide, $P_2O_5$. Usually about 30% $SiO_2$ and 70% phosphoric acid or phosphorous pentoxide is used. In certain cases a calcination at about 300-425° C is performed for binding the phosphoric acid to the carrier material. Treatment with water vapour is sometimes performed for hydrogenating the catalyst.

The catalyst should work between 150 and 220°. A too high temperature leads to tar- and coke formation. A low temperature can lead to formation of phosphoric acid esters., which can cause corrosion later in the system. Another important parameter for the catalyst is the hydrogenation degree. In order to keep the catalyst active there are required free protons, as it is these that are active in the process. If the hydrogenation level is to be kept constant during a long time a small, but controlled, amount of water must all the time be supplied together with the feed. Too much water leads to softening of the catalyst at which it looses its mechanical strength. It has proved that the vapour amount which is present in the gases from a catalytic cracker sometimes is sufficient for keeping the catalyst active. Another big problem is that the fall of pressure over the reactor after about 3-5 months of operation increases rapidly. The catalyst particles are packed together and form a very hard layer. It is a difficult and dangerous work to break this cake when the catalyst is to be changed.

## Object of the invention

The object of the present invention is to provide a solid phosphoric acid catalyst which has high mechanical strength, high activity, long endurance and which is easy to change. This has been achieved by means of a catalyst made according to the method stated in the claims.

## Description of the drawings

Fig. 1 shows the activity of some catalysts made with the method according to the invention and compared with a conventional catalyst.

Fig. 2 shows the activity for a pair of catalysts according to the invention and where different calcination temperatures have been used.

## Description of embodiments

Porous spheres of silicon dioxide with different surfaces, pore size and pore volume are used as carrier material. These have high mechanical strength and are well suited for the purpose. The diameter of these spheres was 2-3 mm. Bodies of other shapes than spheres, e.g. pellets or blocks, may of course be used.

The properties of the silicon dioxide spheres used for the catalyst manufacture can be seen in Table 1 below.

Table 1

| Type | Diam | Surface | Pore vol. | Mean pore size | Density |
|------|------|---------|-----------|----------------|---------|
|      | mm   | m²/g    | ml/g      | Å              |         |
| I    | 2,2  | 72      | 1,0       | 300            | -       |
| II   | 2,2  | 57      | 1,0       | 600            | 0,40    |
| III  | 2-2,8| 52      | 1,3       | 600            | -       |

The spheres were impregnated by immersion in 42% ortho phorphoric acid during 3-5 hours.

The impregnated spheres were partly transparent instead of white. After the impregnation the spheres were dried at 170° during 4-6 hours to a substantially constant weight. Tests were also performed with these catalysts, but it showed that their endurance was short.

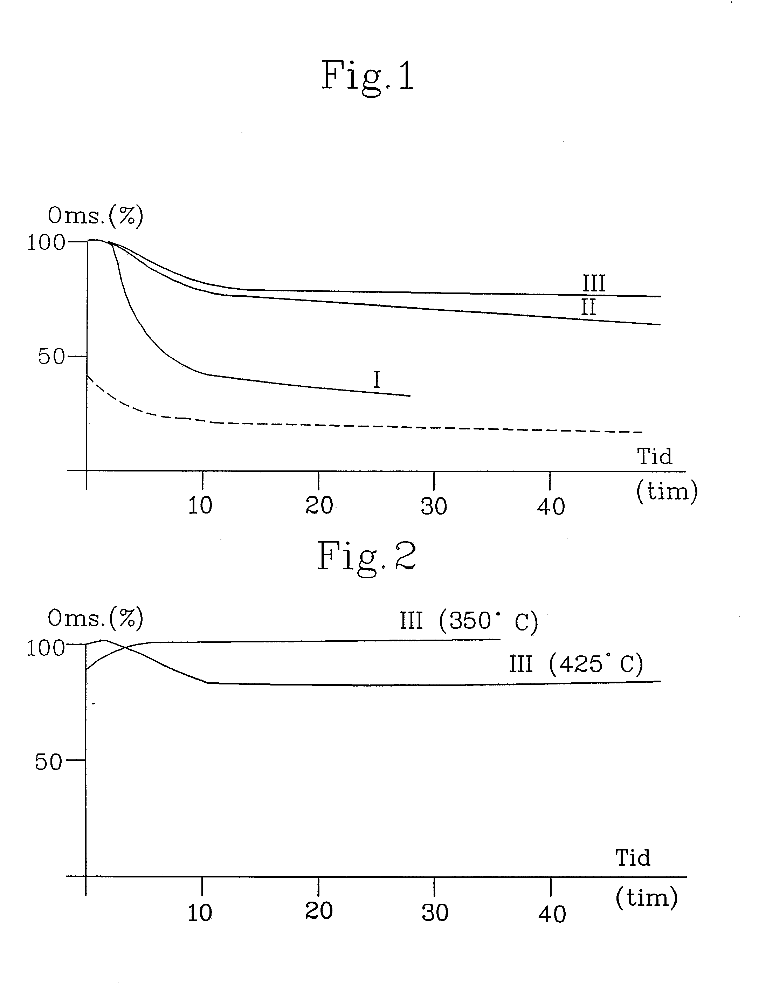

Calcination should therefore be performed at 200-700°C for binding the phosphoric acid to the silicon dioxide. According to the performed embodiments the catalyst were calcinated in an oven at different temperatures between 350 and 525°C during 4 hours. The calcination temperature may not be too high, but may neither be lower than a certain temperature that is required for dehydrogenating the phosphoric acid and/or form bonds between the phosphorous compound and the carrier material. A high temperature leads to loss of too many hydroxyl groups in the phosphorous compound. These hydroxyl groups are probably important for how well the water can bind to the catalyst surface. The water is a condition for keeping the acid sufficiently protonized and by that keeping the activity of the catalyst high. In Fig. 2 there is shown a comparison between the calcination temperatures 350 and 425°C for catalyst III, which shows that a calcination at 350°C gave the best result. A calcination time of 4 hours proved to be appropriate. A precalcination of the silicon dioxide spheres at 525°C before impregnation gave no difference in activity.

After the calcination the catalyst must be wetted for getting the protons back. Normally this is made by treating it with vapour. An even better result was however according to the invention obtained by means of phosphoric acid.

Wetting was performed by dripping phosphoric acid on the catalyst until it was saturated, i.e. until it did not absorb more acid. The same acid was used as for the impregnation, i.e. 42 % ortho phosphoric acid.

Before the catalyst is ready for use it should preferably be dried. Drying should be performed at a temperature as low as possible, but higher than the operating temperature, since otherwise further water would evaporate during operation. The catalysts were dried at 170°C during 4-6 hours. For certain applications the drying step can however be eliminated.

Consecutive treatments of silicon dioxide bodies with drying, calcination and wetting can be performed after the first treatment.

Below a number of tests will be described, which were performed in laboratory scale with the catalyst made according to the invention and as a comparison some commersially used catalysts. Isobutane was used as raw material in the process. The inner diameter of the reactor was 15,3 cm and the total length of the catalyst bed was about 13 cm, which means a total volume of 23 cm³. With a dwell time of about 1 hour and a density of about 0,6, 12-13g/h was charged.

Fig. 1 shows the activity for a solid phosphoric acid catalyst used in the refinery industry (cat A) and for some catalysts made from the silicon dioxide spheres I, II and III according to Table 1. The catalysts I-III are made according to the method described above with the calcination temperature 425°C.

As can be seen the new catalysts give a higher yield than the commercial catalyst used as a comparison. Catalyst III having the biggest pore volume and mean pore size showed the highest activity.

An important advantage beside the high yield is the mechanical strenght, which is based on the high strength of the carrier material. The catalyst according to the invention does not have the same tendency of packing and forming a hard cake, which is the case with many catalysts on the market. The catalyst could after the tests be poured out of the reactor. Probably it is the "cake formation" itself that causes the big fall of pressure over the reactor, which occurs after some months operation and which today is a big problem. If this problem is eliminated the endurance of the catalyst could be increased considerably.

Gas chromatography analysis shows that the product distribution is dependant on the transformation degree. Higher transformation of a certain catalyst gives a higher degree of tri- and tetramers at the same dwell tiem.

The most important field of application for the catalyst is probably in oil refining, for petrol production and production of the petro-chemical raw materials hexene and nonene, which are used for polymers and softening agents for PVC. The catalyst can also be used for production of cumene from propene and benzene and for alcohol production from the corresponding alkene, but it can of course also be used in other catalytic polymerisation process, e.g. at manufacture of detergents, softening agents etc.

## Claims

1. A method of making a catalyst based on silicon dioxide and phosphoric acid,
**characterized in,**
choosing porous granules or bodies, e.g. spheres, pellets or blocks, of silicon dioxide having a mean diameter of at least 1 mm and a high pore volume and pore size as carrier material, impregnating said granules or bodies with phosphoric acid, drying said impregnated granules or bodies at 100-300° and then calcinating them at 200-700° C in order to bind the phosphoric acid to the carrier material, and wetting the calcinated material with phosphoric acid, water or water vapour.

2. A method as claimed in claim 1,
**characterized in,**
that the pore volume of said granules or bodies is at least 0,5 ml/g and the mean pore size is at least 100 Å.

3. A method as claimed in claim 1 or 2,
**characterized in,**
that said granules or bodies have a diameter or length/width between 1 and 50 mm and preferably between 1,5 and 20 mm.

4. A method as claimed in any of the preceding claims,
**characterized in,**
that the pore volume is at least 0,75 and preferably exceeds 1 ml/g and the mean pore size is at least 300 and preferably at least 450Å.

5. A method as claimed in any of the preceding claims,
**characterized in,**
that phosphoric acid with a concentration of 10-85 % (weight %), preferably 30-65 % is used for the impregnation and wetting of said carrier material.

6. A method as claimed in claim 5,
**characterized in,**
that said phosphoric acid is ortophosphoric acid.

7. A method as claimed in any of the preceding claims,
**characterized in,**
that the calcination is performed at a temperature of 200-500° C.

8. A method as claimed in any of the preceding claims,
**characterized in,**
that at least one consecutive treatment of drying, calcinating and wetting the granules or bodies is performed after the first treatment.

# Fig.1

# Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 758 627 (B. JUGUIN)<br>* Claim 1 *<br>--- | 1,5 | B 01 J 27/182 |
| X | US-A-3 661 801 (W.R. GUTMAN)<br>* Claims; example 1 * | 1,7 | |
| Y | <br>--- | 2-4,6 | |
| A | GB-A-1 049 043 (KURASHIKI RAYON)<br>--- | | |
| Y | US-A-2 569 092 (R.F. DEERING)<br>* Claim 1 *<br>--- | 6 | |
| Y | DE-A-1 924 552 (SOCIETE FRANCAISE DES PRODUITS POUR CATALYSE)<br>* Claims 1,6 *<br>--- | 2,4 | |
| Y | US-A-3 996 338 (O.D. FRAMPTON)<br>* Claims; example 12 *<br>----- | 3 | |

TECHNICAL FIELDS SEARCHED (Int. Cl.5)

B 01 J

The present search report has been drawn up for all claims

| Place of search | Date of completion of the search | Examiner |
|---|---|---|
| THE HAGUE | 06-03-1990 | THION M.A. |